# EUROPÄISCHE PATENTSCHRIFT

(11) **EP 2 368 731 B1**
(45) Veröffentlichungstag und Bekanntmachung des Hinweises auf die Patenterteilung: **05.03.2014**
(21) Anmeldenummer: 10290143.6
(22) Anmeldetag: 18.03.2010
(51) Int. Cl.: B60H 1/00

(54) **Vorrichtung zum Betätigen zweier verschwenkbarer Klappen**
Device for actuating two pivotable flaps
Dispositif d'actionnement de deux clapets pivotants

(43) Veröffentlichungstag der Anmeldung: 28.09.2011
(73) Patentinhaber: Behr France Rouffach SAS, 68250 Rouffach (FR)
(72) Erfinder: Celebi, Cem, 68130 Carspach (FR); Luttringer, Christophe, 68700 Steinbach (FR)
(74) Vertreter: Grauel, Andreas

(56) Entgegenhaltungen:
- EP-A1- 0 979 744
- EP-A1- 2 138 335
- DE-A1-102007 024 632
- FR-A1- 2 764 666
- US-A1- 2009 098 817

## Beschreibung

Die Erfindung betrifft eine Vorrichtung zum Betätigen zweier zwischen zwei Endstellungen verschwenkbarer Klappen.

Derartige Vorrichtungen sind beispielsweise in Klimaanlagen, insbesondere in Fahrzeugen, vorgesehen und dienen dazu, Luftklappen zu betätigen, mittels derer Luftströme verschiedener Art und/oder verschiedener Temperatur steuerbar sind.

Bei bekannten derartigen Vorrichtungen ist meist je Klappe ein eigener Antrieb, insbesondere ein eigener Motor, vorgesehen.

Bei anderen bekannten Vorrichtungen der eingangs genannten Art ist zwar eine gemeinsame Antriebswelle vorgesehen, jedoch ist der Mechanismus zur Steuerung wenigstens zweier Klappen recht kompliziert und aufwändig, wie dies beispielsweise bei der EP 0 301 379 B1 der Fall ist.

Bei der US 2009/009 88 17 A1, der als nächstliegender Stand der Technik angesehen wird, wird ein Mechanismus zur Steuerung dreier Klappen mittels einer Kurvenscheibe offenbart.

Es ist Aufgabe der Erfindung, eine Vorrichtung der eingangs genannten Art dahingehend weiter zu entwickeln, dass bei möglichst geringem baulichen Aufwand der Vorrichtung beide Klappen betätigt werden können und für beide Klappen gegebenenfalls differierende Öffnungsstellungen möglich sind.

Diese Aufgabe ist für eine Vorrichtung der eingangs genannten Art durch eine Vorrichtung nach Anspruch 1 gelöst. Die Vorrichtung zum Betätigen zweier zwischen zwei Endstellungen verschwenkbarer Klappen, weist eine Antriebswelle und einen mit der Antriebswelle drehfest gekoppeltem Schwinghebel auf. Der Schwinghebel ist mit einer Kulissenführung versehen, mittels der er über ein in der Kulissenführung geführtes Kulissenelement mit einem, mit der ersten Klappe drehfest verbundenen Achshebel gekoppelt ist. Die Kulissenführung weist einen ersten Kulissenführungsabschnitt auf, der kreisbahnabschnittsförmig um die Drehachse der Antriebswelle verläuft, und weist ferner einen zweiten, sich dem ersten Kulissenführungsabschnitt mit einer Knickstelle anschließenden, bogenförmigen Kulissenftihrungsabschnitt auf.

Erfindungsgemäß ist ein zweiter Schwinghebel der an einer Anlenkverbindung drehbar mit einer Schwinge koppelbar ist, welche mit einem an einer zweiten Klappe drehfest verbundenen zweiten Hebel drehbar gekoppelt ist, vorgesehen. Es versteht sich, dass der erste und der zweite Schwinghebel auch einstückig vorgesehen sein können, etwa in einem Kunststoff-Spritzgussteil.

Erfindungsgemäß wird eine Antriebswelle sowie zwei mit der Antriebswelle drehfest gekoppelte Schwinghebel vorgesehen, von denen ein erster Schwinghebel die Kulissenführung in Form eines Langloch aufweist, in welchem ein Kulissenelement in Form eines einfachen Gleitstifts führbar ist, welcher an einem mit einer ersten Klappe gekoppelten ersten Hebel vorgesehen ist, und von denen ein zweiter Schwinghebel an einer Anlenkverbindung drehbar mit einer Schwinge gekoppelt ist, welche mit einem an einer zweiten Klappe vorgesehenen zweiten Hebel drehbar gekoppelt ist. In diesem Beispiel ist also nur eine einzige Antriebswelle für die Klappensteuerung vorgesehen, welche beispielsweise mittels eines Schrittmotors antreibbar ist. An dieser einen Antriebswelle sind zwei Schwinghebel vorgesehen, mittels derer die beiden Klappen steuerbar sind. Der erste Schwinghebel weist ein Langloch auf, in das ein Gleitstift eingreift, der an einem Hebel der ersten Klappe vorgesehen ist.

Der zweite Schwinghebel wirkt über eine Schwinge auf einen Hebel, der an einer zweiten Klappe vorgesehen ist. Die Schwinge ist dabei jeweils an dem zweiten Schwinghebel und an dem zweiten Hebel an der zweiten Klappe drehbar gelagert.

Mittels dieser relativ einfachen Anordnung ist dennoch eine Kinematik gegeben, die einerseits ein Steuern beider Klappen mittels einer Antriebswelle gestattet. Ferner kann dadurch, dass ein Hebel über die Kulissenführung unmittelbar auf einen Hebel der einen Klappe wirkt, der andere Schwinghebel jedoch über eine Schwinge auf einen Hebel der zweiten Klappe wirkt, erreicht werden, dass mit Änderung der Winkelstellung der Antriebswelle eine beiden Klappen in einer Position bleibt während die andere Klappe bewegt wird. Somit kann es Winkelstellungen der Antriebswelle geben, in denen beispielsweise die eine Klappe geöffnet und die andere geschlossen ist oder umgekehrt.

Die erfindungsgemäße Vorrichtung kann vorteilhaft, wie nach weiteren Ausgestaltungen der Erfindung vorgesehen ist, für Klimaanlagen in Fahrzeugen eingesetzt werden und dort Luftklappen betätigen. Der Einsatz in Fahrzeugen steht einerseits unter hohem Kostendruck und erfordert relativ kleine Vorrichtungen. Beides ist durch die erfindungsgemäße Vorrichtung erfüllt.

Nachfolgend wird ein Ausführungsbeispiel der Erfindung anhand der Zeichnungen näher erläutert. Es zeigen:
Fig. 1 ein Teil einer Heizungs-, Lüftungs- oder Klimaanlage für ein Fahrzeug in transparenter Ansicht mit einer erfindungsgemäßen Vorrichtung zur Betätigung zweier Luftklappen,
Fig. 2 eine Seitenansicht der Anlage gemäß Fig. 1,
Fig. 3 eine Darstellung gemäß Fig. 2, jedoch ohne Schwinge,
Fig. 4 eine Darstellung entsprechend Fig. 1, jedoch mit anderen Luftklappenstellungen,
Fig. 5 eine perspektivische transparente Darstellung der Anlage gemäß Fig. 1,
Fig. 6 eine perspektivische transparente Darstellung der Anlage gemäß Fig. 4, und
Fig. 7 ein Diagramm zur Verdeutlichung der mittels der erfindungsgemäßen Vorrichtung erzielbaren Luftklappenstellungen der Anlage gemäß Fig. 1-4.

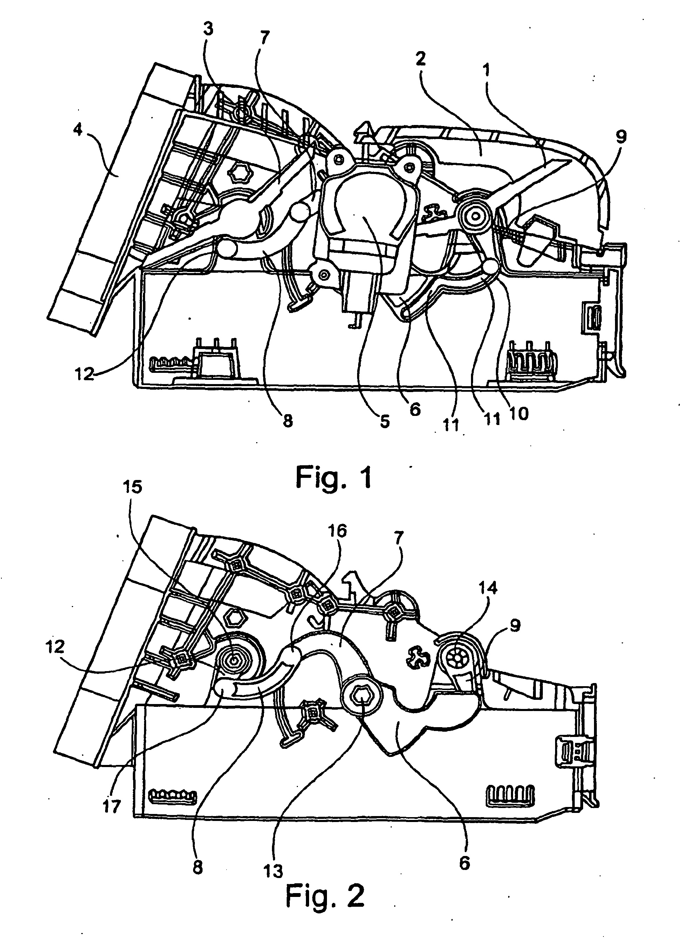

In Fig. 1 ist in teilweise transparenter Seitenansicht ein Ausschnitt einer Klimaanlage dargestellt, wie sie beispielsweise für Fahrzeuge vorgesehen sein kann. Die Anordnung zeigt eine erfindungsgemäße Vorrichtung zum Betätigen zweier Klappen, nämlich einer ersten Luftklappe 1, mittels der in einem Umluftkanal 2 geführte Umluft steuerbar ist, sowie einer zweiten Luftklappe 3, mittels der von außen angesaugte Frischluft in einem Luftkanal 4 steuerbar ist. Für die Klappen 1 und 3 ist die Verschlussstellung als erste Endstellung bezeichnet und die maximale Offensteltung als zweite Endstellung. In Figur 1 befindet sich die Klappe 1 in der zweiten Endstellung, ist also maximal geöffnet und die Klappe 3 in der ersten Endstellung.

In Fig. 1 ist ein Antriebsmotor 5 angedeutet, welcher auf eine in der Figur nicht angedeutete Antriebswelle wirkt, an der ein erster Schwinghebel 6 sowie ein zweiter Schwinghebel 7 drehfest befestigt sind.

Es ist ferner eine Schwinge 8 vorgesehen, welche an dem der Antriebswelle abgewandten Ende des zweiten Schwinghebels 7 mit diesem drehbar gekoppelt ist.

Die erste Luftklappe 1 ist mit einem Hebel 9 gekoppelt, welcher an seinem Ende ein Kulissenelement 10 in Form eines Gleitstifts aufweist, welcher in einer in dem ersten Schwinghebel 6 vorgesehenen Kulissenführung 11 führbar ist, welche einen Verlauf in Form zweier hintereinander über einen Knickstelle verbundener Bögen aufweist.

Das der in der Fig. 1 nicht angedeuteten Antriebswelle abgewandte Ende des zweiten Schwinghebels 7 weist eine Drehverbindung mit der Schwinge 8 auf. Das andere Ende der Schwinge 8 wirkt ebenfalls mit einer Drehverbindung auf einen an der zweiten Klappe 3 vorgesehenen Hebel 12.

Je nach Winkelstellung der in der Fig. 1 nicht angedeuteten Antriebswelle werden somit die beiden Schwinghebel 6 und 7 bewegt und somit einerseits der Gleitstift 10 in der Kulissenführung 11 des zweiten Schwinghebels 6 bewegt und andererseits über die Schwinge 8 der Hebel 12, der mit der Klappe 3 gekoppelt ist, bewegt.

Mit dieser Kinematik ist es möglich, die Luftklappen 1 und 3 in gewünschter Weise zu zwischen den Endstellungen zu steuern, wobei auch differierende Öffnungsgerade der beiden Klappen möglich sind. Dies wird anhand der nachfolgenden Figuren näher erläutert.

Fig. 2 zeigt den Ausschnitt der Klimaanlage gemäß Fig. 1 mit der erfindungsgemäßen Vorrichtung in einer Seitenansicht, wobei der Antriebsmotor 5 hier nicht gezeigt ist.

Die Darstellung gemäß Fig. 2 zeigt deutlich den Schwinghebel 6 sowie den zweiten Schwinghebel 7, die beide mit einer Antriebswelle 13 drehfest gekoppelt sind.

Ferner zeigt die Darstellung gemäß Fig. 2 eine Drehachse 14, welche mit der ersten Luftklappe 1 gemäß Fig. 1 gekoppelt ist. Mit der Drehachse 14 der Klappe 1 ist in der Darstellung gemäß Fig. 2 ferner ein Hebel 9 gekoppelt, welcher in oben erläuterter Weise über einen an dem Hebel 9 vorgesehenen Gleitstift 10 sowie einem an dem Schwinghebel 6 vorgesehenen Langloch 11 mit dem ersten Schwinghebel 6 gekoppelt ist.

Die Darstellung gemäß Fig. 2 zeigt ferner eine weitere Drehachse 15, welche in in der Fig. 2 nicht näher dargestellter Weise mit der zweiten Luftklappe 3 der Darstellung gemäß Fig. 1 gekoppelt ist.

An der Achse 15 und mit dieser gekoppelt befindet sich ferner ein Hebel 12, welcher über eine Achsverbindung 17 mit der Schwinge 8 gekoppelt ist. Am anderen Ende der Schwinge 8 befindet sich eine weitere Drehverbindung 16, welche eine drehbare Kopplung mit dem zweiten Schwinghebel 7 herstellt.

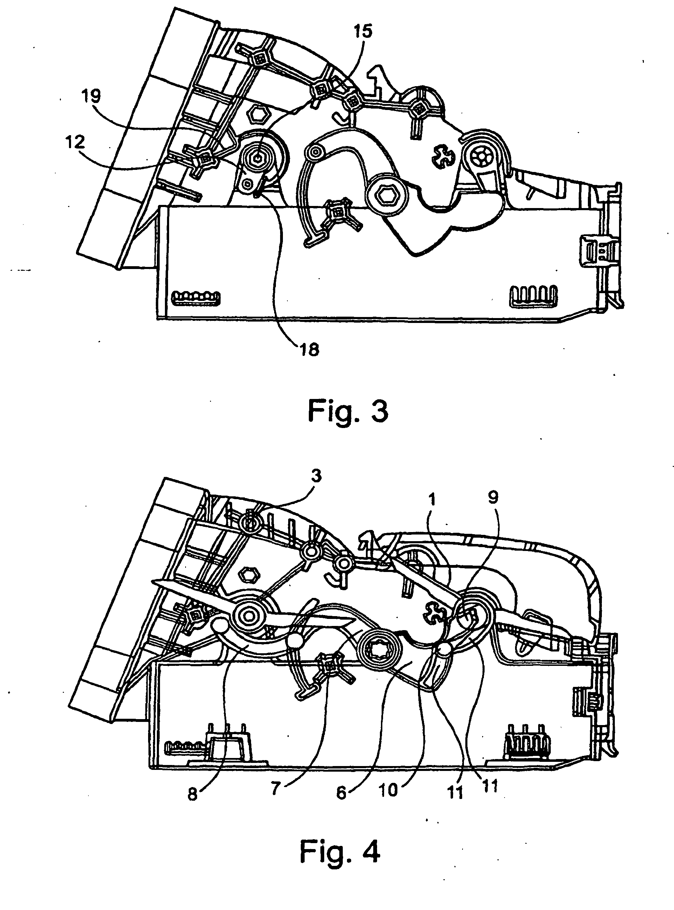

Fig. 3 zeigt eine Darstellung entsprechend Fig. 2, jedoch ist hier für die Zwecke der besseren Anschauung die Schwinge 8 weggelassen. Es ist in Fig. 3 eine Vorrichtung mit Anschlägen 18 und 19 deutlich gezeigt, wobei Anschlag 18 des Drehbereich des Hebels 12 und somit auch der Luftklappe 3 begrenzt. In der Darstellung gemäß Figur 3 befindet sich der Hebel 12 am Anschlag 18; dabei ist die Luftklappe 3 (Figur 1) in erster Endstellung vollständig geschlossen. Befindet sich der Hebel am Anschlag 19, so ist die Luftklappe vollständig geöffnet (Fig. 4).

Diese Position zeigt Fig. 4, in welcher ein Teil einer Klimaanlage mit einer erfindungsgemäßen Vorrichtung zur Klappenbetätigung entsprechend Fig. 1 dargestellt ist; außer der zweiten Luftklappe 3 befindet sich auch die erste Luftklappe 1 in einer anderen Position nämlich hier in der ersten Endstellung Verschlusstellung als in der Darstellung gemäß Figur 1.

Gegenüber der Darstellung in den Fig. 1-3 wurde die Drehachse der Antriebswelle 13 in der Darstellung gemäß Fig. 4 um einige Grad gegen den Uhrzeigersinn bewegt.

Dies führt einerseits dazu, dass der an dem Hebel 9 vorgesehene Gleitstift 10 sich im zweiten zum Hebelende des Hebels 6 gelegenen Abschnitt der Kulissenführung 11 weiter zur Mitte des Hebels 6 hin bewegt hat.

Da die Kulissenführung 11 zweifach kurvenförmig ausgebildet ist, vollführt der Hebel 9 dabei zunächst im ersten Abschnitt Kulissenführung 11 keine Drehbewegung, so dass Klappe 1 in einer Verschlussstellung befindet und bleibt, und im zweiten Abschnitt der Kulissenführung 11 eine Drehbewegung, so dass auch die Klappe 1 eine entsprechende Drehbewegung vollzieht und sich öffnet bis sie die in Fig. 1 gezeigte Endstellung erreicht hat.

Ferner ist durch die Bewegung der Antriebsachse 13 der zweite Schwinghebel 7 bewegt worden, so dass auch die Schwinge 8 mittels des Schwinghebels 7 entsprechend bewegt wurde. Wie die Darstellung gemäß Fig. 4 zeigt, wurde mittels der Schwinge 8 der zweite Hebel 12 gegenüber der Darstellung in Figur 1 m Uhrzeigersinn bewegt, so dass die Luftklappe 3 in entsprechender Weise bewegt wurde und sich nunmehr in geöffneter Stellung, also in der zweiten Endstellung befindet.

Ein Vergleich der Darstellung gemäß den Fig. 1 und 4 zeigt, dass durch die Rotation der Drehachse 13 entgegen dem Uhrzeigersinn und durch die entsprechende Bewegung der Schwinghebel 6 und 7 die erste Luftklappe 1 vom geöffneten in den geschlossenen Zustand und ferner die zweite Luftklappe 3 vom geschlossenen in den geöffneten Zustand bewegt wurde.

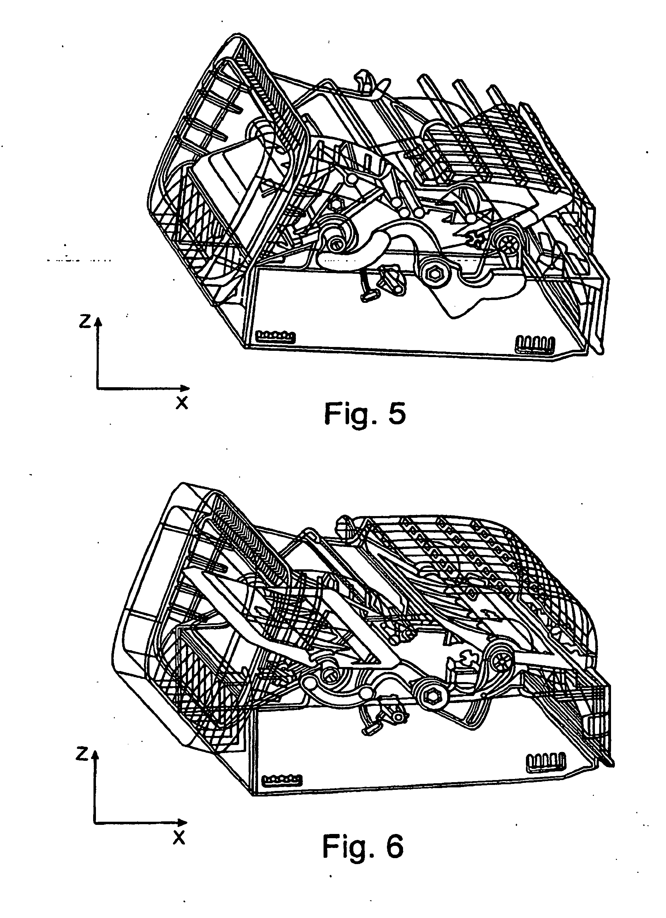

Zur Verdeutlichung der Klappenstellung zeigt Fig. 5 noch eine perspektivische transparente Darstellung der Anlage gemäß Fig. 1 und Fig. 6 eine perspektivische transparente Darstellung der Anlage gemäß Fig. 4.

Nicht gezeigt ist die Stellung der Vorrichtung, wenn die Drehachse ausgehend von Fig. 4 eine weitere Drehung im Uhrzeigersinn vollführt. Hier bleibt Klappe 1 während der Drehung in der ersten Endstellung, während Klappe 3 wieder schließt.

Die mittels der erfindungsgemäßen Vorrichtung erzielbaren verschiedenen Öffnungsgrade der beiden Klappen werden nachfolgend anhand eines in der Fig. 5 dargestellten Diagramms näher erläutert.

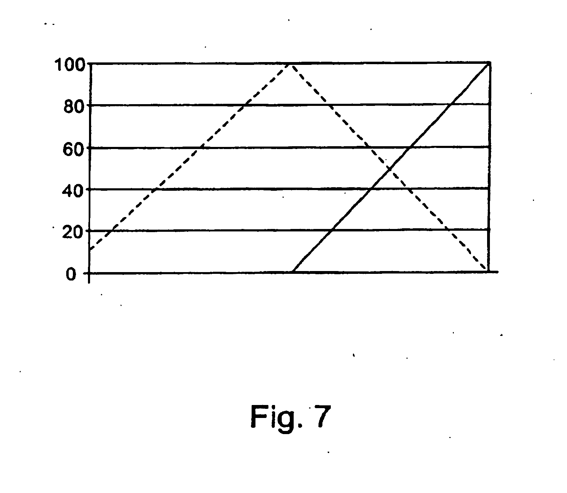

Das in Fig. 7 aufgetragene Diagramm zeigt auf der Ordinate den Öffnungsgrad der Luftklappen von 0 - 100 Prozent aufgetragen über der Winkelposition des Antriebs der erfindungsgemäßen Vorrichtung.

In dem Diagramm sind der Öffnungswinkel für die Außenluftklappe 3 mittels einer gestrichelten Linie und der Öffnungsgrad der Umluftklappe 1 mittels einer durchgezogenen Linie angedeutet.

Die Fig. 7 zeigt am rechten Ende der Abszisse, dass bei maximaler Winkelposition des Antriebs die Umluftklappe 1 voll geöffnet ist, also einen Öffnungsgrad von 100% aufweist, die Außenluftklappe 3 jedoch vollständig geschlossen ist, also einen Öffnungsgrad von 0% aufweist. Dies entspricht den Darstellungen gemäß den Figuren 1-3.

Bei von dieser Position ausgehender Veränderung der Winkelposition des Antriebs entgegen dem Uhrzeigersinn auf der Abszisse nach links wanderns öffnet sich die Außenluftklappe 3 entsprechend der Darstellung gemäß Fig. 7 immer mehr, hingegen schließt sich die Umluftklappe 1 zunehmend. Es wird schließlich, wie in der Abszissenmitte angedeutet, eine Position erreicht, in der die Außenluftklappe 3 voll geöffnet ist, also einen Öffnungsgrad von 100% aufweist, und in der die Umluftklappe 1 voll geschlossen ist, also einen Öffnungsgrad von 0% aufweist. Dies entspricht der Darstellung entsprechend Fig. 4.

Nicht gezeigt ist eine Darstellung der Klappenstellung für die linke Abszissenseite. Klar ist, das sich hier die Position der Umluftklappe 1 nicht ändert, da die Kulissenführung 11 in diesem Abschnitt eine Kreisbahn um die Drehachse 13 beschreibt und somit keine Krafteinwirkung oder Führung auf dem Kullissenelement des Hebels 9 bewirkt. Die Außenluftklappe 3 wird geschlossen bis zu einem hier gezeigten Öffnungsgrad von 10 Prozent, aufgetragen am linken Abszissenrand.

Ausgehend von Fig. 1 wird bezüglich der Stellung von Klappe 3 bei Überstreichen der möglichen Winkelpositionen durch die Drehachse, Hebel 8 nach links gedrückt, so dass die Klappe 3 sich öffnet bis sie 100% offen steht (Fig. 4). Hebel 9 ist hier mittels Hebel 7 der über ein Kulissenelement in der kreisbogenförmigen Kulissenführung maximal nach links geschoben. Dreht sich die Drehachse nun weiter, wird der Hebel 8 nach rechts gezogen, bis das andere Ende der Kulissenführung des Anlagengehäuses erreicht.

Wird die Antriebswelle gegenüber der Position entsprechend Fig. 4 weiter gegen den Uhrzeigersinn gedreht, so bleibt, wie die Darstellung gemäß Fig. 7 zeigt, die Umluftklappe 1 geschlossen. Jedoch wird mit zunehmend im Uhrzeigersinn gedrehter Antriebswelle die Außenluftklappe 3 zunehmend geschlossen, bis sie schließlich in der Winkelposition 0 einen Öffnungsgrad von nur noch 10% aufweist.

Ein derartiges Schließen der Außenluftklappe 3 bei unverändert geschlossener Umluftklappe 1 kann beispielsweise vorteilhaft dazu eingesetzt werden, die Außenluftklappe 3 mit zunehmender Fahrtgeschwindigkeit des Fahrzeuges, in dem die erfindungsgemäße Vorrichtung vorgesehen ist, zu verschließen.

## Patentansprüche

1. Vorrichtung zum Betätigen zweier zwischen zwei Endstellungen verschwenkbarer Klappen (1, 3), aufweisend eine Antriebswelle (13) und einen mit der Antriebswelle (13) drehfest gekoppeitem Schwinghebel (6), der eine Kulissenführung (11) aufweist, mittels der er über ein in der Kulissenführung geführtes Kulissenelement (10) mit einem, mit der ersten Klappe (1) drehfest verbundenen Achshebel (9) gekoppelt ist, wobei die Kulissenführung (11) als Langloch einen ersten Kulissenführungsabschnitt aufweist, der kreisbahnabschnittsförmig um die Drehachse der Antriebswelle (13) verläuft, und ferner einen zweiten, sich dem ersten Kulissenführungsabscknitt mit einer Knickstelle anschließenden, bogenförmigen Kulissenführungsabschnitt aufweist und einen zweiten Schwinghebel (7) aufweist, der an einer Anlenkverbindung (16) drehbar mit einer Schwinge (8) koppelbar ist, welche mit einem an einer zweiten Klappe (3) drehfest verbundenen zweiten Hebel (12) drehbar gekoppelt ist, wobei das am ersten Schwinghebel (6) vorgesehene Langloch (11) und die am zweiten Schwinghebel (7) vorgesehene Anlenkverbindung (16) jeweils an den der Antriebswelle (13) abgewandten Enden der Schwinghebel (6, 7) vorgesehen sind.

2. Vorrichtung nach Anspruch 1, **dadurch gekennzeichnet, dass** es sich bei den Klappen (1, 3) um Luftklappen handelt.

3. Vorrichtung nach einem der Ansprüche 1 oder 2, **dadurch gekennzeichnet, dass** die Endpunkte der beiden Schwinghebel (6, 7) etwa einen Winkel von 90-180 Grad um die Antriebsachse (13) zueinander aufweisen.

4. Vorrichtung nach einem der Ansprüche 1 bis 3, **dadurch gekennzeichnet, dass** die Klappen (1, 3) jeweils in eine erste Endstellung, in der sie geschlossen sind, und in eine zweite Endstellung verschwenkbar sind, in der Sie geöffnet sind.

5. Vorrichtung nach einem der Ansprüche 1 bis 4, **dadurch gekennzeichnet, dass** die Antriebswelle (13) mittels eines Elektromotors (5) antreibbar ist.

6. Vorrichtung nach einem der Ansprüche 1 bis 5, **dadurch gekennzeichnet, dass** die Antriebswelle (13) von einer ersten, über eine zweite in eine dritte Winkelpostion drehbar ist.

7. Vorrichtung nach Anspruch 6, **dadurch gekennzeichnet, dass**
- in der ersten Winkelstellung der Antriebswelle (13) die erste Klappe (1) geschlossen und die zweite Klappe (3) nahezu geschlossen ist,
- in der zweiten Winkelpostion der Antriebswelle (13) die erste Klappe (1) geschlossen und die zweite Klappe (3) geöffnet ist und
- in der dritten Winkelstellung der Antriebswelle (13) die erste Klappe (1) geöffnet und die zweite Klappe (3) geschlossen ist.

8. Vorrichtung nach Anspruch 7, dadurch gekennzeichet, dass in Winkelpostionen zwischen den ersten, zweiten und dritten Winkelstellungen der Antriebswelle die Klappen (1, 3) in entsprechende Zwischenpositionen zwischen den Klappenstellungen, die sie an den drei Winkelstellungen haben, bewegbar sind.

9. Heizungs-, Belüftungs- und/oder Klima-Anlage für ein Fahrzeug mit einer Vorrichtung nach einem der Ansprüche 1 bis 8.

10. Heizungs-, Belüftungs- und/oder Klima-Anlage nach Anspruch 9, aufweisend eine Kulissenführung, in der ein Gleitelement der Anlenkverbindung geführt ist, wobei die Kulissenführung kreisbogenförmig um die Drehachse der Antriebswelle verläuft.

11. Fahrzeug mit einer Heizungs-, Belüftungs- und/oder Klima-Anlage mit einer Vorrichtung nach einem der Ansprüche 1 bis 8.

12. Verfahren zum Bestätigen zweier zwischen zwei Endstellungen verschwenkbarer Klappen mit einer Vorrichtung nach einem der Ansprüche 1 bis 8, wobei die erste Klappe mit Teildrehung der Antriebswelle dann in einer ersten Endstellung verschwenkt bleibt, wenn das Kulissenelement in einem ersten Kulissenabschnitt geführt ist und bis zu einer zweite Endstellung stetig verschwenkt wird, wenn das Kulissenelement in einem zweiten Kulissenanschnitt geführt ist.

13. Verfahren nach Anspruch 12, wobei die zweite Klappe mit der Teildrehung der Antriebswelle von einer ersten Endstellung über eine zweite Endstellung verschwenkt wird, wenn das Kulissenelement im ersten Kulissenabschnitt geführt ist, und von dort wieder in die erste Endstellung verschwenkt wird, wenn das Kulissenelement im zweiten Kulissenabschnitt geführt ist.

## Claims

1. A device for actuating two flaps (1, 3) that can be pivoted between two end positions, comprising a drive shaft (13) and a rocker lever (6) that is non-rotatably coupled to the drive shaft (13) and comprises a slotted guide system (11), by means of which the lever is coupled via a slotted element (10) that is guided in the slotted guide system to an axle lever (9) that is non-rotatably connected to the first flap (1), wherein the slotted guide system (11), as an elongated hole, comprises a first slotted guide system section extending in a circular path section shape about the rotational axis of the drive shaft (13), and further comprises a second arcuate slotted guide system section, which adjoins the first slotted guide system section with a bending point, and a second rocker lever (7), which on an articulating connection (16) can be rotatably coupled to a link (8), which is rotatably coupled to a second lever (12) that is non-rotatably connected to a second flap (3), wherein both the elongated hole (11) provided on the first rocker lever (6) and the articulated connection (16) provided on the second rocker lever (7) are provided at the respective ends of the rocker levers (6, 7) that face away from the drive shaft (13).

2. The device according to claim 1, **characterized in that** the flaps (1, 3) are air flaps.

3. The device according to either claim 1 or 2, **characterized in that** the end points of the two rocker levers (6, 7) approximately have an angle of 90 to 180 degrees with respect to each other about the drive axis (13).

4. A device according to any one of claims 1 to 3, **characterized in that** each of the flaps (1, 3) can be pivoted into a first end position, in which they are closed, and into a second end position, in which they are open.

5. A device according to any one of claims 1 to 4, **characterized in that** the drive shaft (13) can be driven by way of an electric motor (5).

6. A device according to any one of claims 1 to 5, **characterized in that** the drive shaft (13) can be rotated from a first, via a second, and into a third angular position.

7. The device according to claim 6, **characterized in that**
- in the first angular position of the drive shaft (13), the first flan (1) is closed and the second flap (3) is almost closed;
- in the second angular position of the drive shaft (13), the first flap (1) is closed and the second flap (3) is open; and
- in the third angular position of the drive shaft (13), the first flap (1) is open and the second flap (3) is closed.

8. The device according to claim 7, **characterized in that**, in angular positions between the first, second and third angular positions of the drive shaft, the flaps (1, 3) can be moved into corresponding intermediate positions between the flap positions that these have in the three angular positions.

9. A heating, ventilation and/or air-conditioning system for a vehicle, comprising a device according to any one of claims 1 to 8.

10. The heating, ventilation and/or air-conditioning system according to claim 9, comprising a slotted guide system in which a sliding element of the articulated connection is guided, wherein the slotted guide system runs in a circular arc shape about the rotational axis of the drive shaft.

11. A vehicle comprising a heating, ventilation and/or air-conditioning system comprising a device according to any one of claims 1 to 8.

12. A method for actuating two flaps that can be pivoted between two end positions, comprising a device according to any one of claims 1 to 8, wherein the first flap, with a partial rotation of the drive shaft, remains pivoted in a first end position if the slotted element is guided in a first slot section and is steadily pivoted up to a second end position if the slotted element is guided in a second slot section.

13. The method according to claim 12, wherein the second flap, with the partial rotation of the drive shaft, is pivoted from a first end position via a second end position if the slit element is guided in the first slot section and is pivoted, from there, back into the first end position if the slot element is guided in the second slot section.

## Revendications

1. Dispositif servant à actionner deux volets (1, 3) pouvant basculer entre deux positions de fin de course et présentant un arbre d'entraînement (13) et un levier oscillant (6) couplé, solidaire en rotation, à l'arbre d'entraînement (13), levier oscillant qui présente un guide de coulisse (11) au moyen auquel le lever oscillant est couplé à un levier d'axe (9) relié, solidaire en rotation, au premier volet (1) par un élément de coulisse (10) guidé dans le guide de coulisse, où le guide de coulisse (11) configuré comme un trou oblong présente une première partie du guide de coulisse qui s'étend en forme de tronçon de trajectoire circulaire, autour de l'axe de rotation de l'arbre d'entraînement (13), et présente en outre une deuxième partie du guide de coulisse en forme d'arc faisant suite, en comportant un coude, à la première partie du guide de coulisse, et présente un deuxième levier oscillant (7) qui peut être couplé à une manivelle oscillante (8) en tournant au niveau d'une liaison articulée (16), manivelle oscillante qui est couplée en rotation à un deuxième levier (12) relié, solidaire en rotation, à un deuxième volet (3), où le trou oblong (11) prévu au niveau du premier levier oscillant (6) et la liaison articulée (16) prévue au niveau du deuxième levier oscillant (7) sont prévues, respectivement, au niveau des extrémités - placées à l'opposé de l'arbre d'entraînement (13) - des leviers oscillants (6, 7).

2. Dispositif selon la revendication 1, **caractérisé en ce que** concernant les volets (1, 3), il s'agit de volets d'air.

3. Dispositif selon l'une des revendications 1. ou 2, **caractérisé en ce que** les points d'extrémités des deux leviers oscillants (6, 7) présentent l'un par rapport à l'autre, par exemple un angle de 90 degrés à 180 degrés autour de l'arbre d'entraînement (13).

4. Dispositif selon l'une quelconque des revendications 1 à 3, **caractérisé en ce que** les volets (1, 3) sont, respectivement, dans une première position de fin de course dans laquelle ils sont fermés, et peuvent basculer dans une deuxième position de fin de course dans laquelle ils sont ouverts.

5. Dispositif selon l'une quelconque des revendications 1 à 4, **caractérisé en ce que** l'arbre d'entraînement (13) peut être actionné au moyen d'un moteur électrique (5).

6. Dispositif selon l'une quelconque des revendications 1 à 5, **caractérisé en ce que** l'arbre d'entraînement (13) peut être déplacé en rotation, passant d'une première à une troisième position angulaire, via une deuxième position angulaire.

7. Dispositif selon la revendication 6, **caractérisé en ce que**
- dans la première position angulaire de l'arbre d'entraînement (13), le premier volet (1) est fermé et le deuxième volet (3) est presque fermé,
- dans la deuxième position angulaire de l'arbre d'entraînement (13), le premier volet (1) est fermé et le deuxième volet (3) est ouvert, et
- dans la troisième position angulaire de l'arbre d'entraînement (13), le premier volet (1) est ouvert et le deuxième volet (3) est fermé.

8. Dispositif selon la revendication 7, **caractérisé en ce que** dans des positions angulaires se situant entre les première, deuxième et troisième positions angulaires de l'arbre d'entraînement, les volets (1, 3) sont mobiles dans des positions intermédiaires correspondantes se situant entre les positions des volets qu'ils ont au niveau des trois positions angulaires.

9. Système de chauffage, de ventilation et/ou de climatisation pour un véhicule équipé d'un dispositif selon l'une quelconque des revendications 1 à 8.

10. Système de chauffage, de ventilation et/ou de climatisation selon la revendication 9, présentant un guide de coulisse dans lequel est guidé un élément coulissant de la liaison articulée, où le guide de coulisse s'étend en forme d'arc de cercle autour de l'axe de rotation de l'arbre d'entraînement.

11. Véhicule équipe d'un système de chauffage, de ventilation et/ou de climatisation comportant un dispositif selon l'une quelconque des revendications 1 à 8.

12. Procécé servant à actionner deux volets pouvant basculer entre deux positions de fin de course et avant un dispositif selon l'une quelconque des revendications 1 à 8, où le premier volet, par une rotation partielle de l'arbre d'entraînement, reste alors basculé dans une première position de fin de course quand l'élément de coulisse est guide dans une première partie du guide de coulisse, et est basculé dans une deuxième position de fin de course, de façon permanente, quand l'élément de coulisse est guidé dans une deuxième partie du guide de coulisse.

13. Procédé selon la revendication 12, où la deuxième volet, par la rotation partielle de l'arbre d'entraînement, est basculé, passant d'une première positions de fin de course à une deuxième position de fin de course quand l'élément de coulisse est guide dans la première partie da guide de coulisse et, de là, est basculé à nouveau dans la première position de fin de course quand l'élément de coulisse est guidé dans la deuxième partie du guide de coulisse.
